# EUROPÄISCHE PATENTSCHRIFT

(11) **EP 1 563 450 B1**
(45) Veröffentlichungstag und Bekanntmachung des Hinweises auf die Patenterteilung: **15.08.2007**
(21) Anmeldenummer: 03779694.3
(22) Anmeldetag: 12.11.2003
(51) Int. Cl.: G06K 19/07

(54) **VORRICHTUNG ZUR VERSORGUNG EINER DATENÜBERTRAGUNGSEINHEIT MIT ENERGIE**
DEVICE FOR SUPPLYING A DATA TRANSMISSION UNIT WITH ENERGY
DISPOSITIF D'ALIMENTATION D'UNE UNITE DE TRANSMISSION DE DONNEES EN ENERGIE

(30) Priorität: 19.11.2002 DE 10253920
(43) Veröffentlichungstag der Anmeldung: 17.08.2005
(73) Patentinhaber: Infineon Technologies AG, 81669 München (DE)
(72) Erfinder: BAGLIN, Thomas, Jean, Ludovic, 8020 Graz (AT); MISSONI, Albert, A-8010 Graz (AT)
(74) Vertreter: Epping - Hermann - Fischer
(86) Internationale Anmeldenummer: PCT/DE2003/003750
(87) Internationale Veröffentlichungsnummer: WO 2004/047015

(56) Entgegenhaltungen:
- DE-A- 4 104 274
- US-B1- 6 275 681

## Beschreibung

### Technisches Gebiet

Die Erfindung betrifft eine Vorrichtung zur Versorgung einer Datenübertragungseinheit, beispielsweise eines Chips einer Chipkarte, mit Energie.

Bei einer Chipkarte erfolgt die Kommunikation, also das Senden und Empfangen von Daten mittlerweile kontaktlos. Auch die Versorgung des Senders und des Empfängers der Chipkarte mit Energie erfolgt mittlerweile berührungslos. Die Energie für die Versorgung des Senders und des Empfängers der Chipkarte wird aus dem elektrischen Feld, das die Chipkarte umgibt, entnommen.

Da der Trend zu höheren Datenübertragungsraten bis hin zu 1 Mbit/s und höher geht und gleichzeitig der Stromverbrauch im Chip steigt, steigen auch die Anforderungen bei der Versorgung des Chips mit Energie.

Die Datenübertragung erfolgt mit Hilfe einer hochfrequenten Amplitudenmodulation. Es werden Daten vom Kartenleser zum Chip, wobei der Chip dann als Empfänger dient, als auch Daten vom Chip zum Kartenleser, wobei der Chip dann als Sender dient, übertragen. Der Kartenleser wird des öfteren auch als Reader bezeichnet. Bei einer Datenrate von 1 Mbit/s und höher sowie gleichzeitig großem Stromverbrauch des Chips wird es schwierig bei der Lastmodulation, das heißt bei einer Datenübertragung vom Chip zum Kartenleser, einen ausreichend großen Modulationshub mit den derzeitigen Systemen zu erreichen. Beim Empfang der vom Kartenleser gesendeten Daten wird es ebenfalls schwierig einen genügend großen Signalhub zu erreichen, um das modulierte Signal aus dem Rauschen und den Störungen der Koppelstrecke bzw. des Chips deutlich hervorzuheben. Um die Erkennungsgenauigkeit zu erhöhen, ist es deshalb von Vorteil ein gutes Signal-Rausch-Verhältnis zu erreichen.

In der Regel ist auf dem Chip ein Energiespeicher zur Energieversorgung des Chips vorgesehen. Wird die Kapazität des Energiespeichers im Versorgungspfad sehr klein gewählt, muss ein neues Konzert für die Energieversorgung des Chips während der Feldlücken, wie sie bei einer TypA-Betriebsweise auftreten, eingeführt werden.

Bei einem Modulationsindex von 100% wird im folgenden von einem TypA-Übertragungsverfahren gesprochen.

### Stand der Technik

Die konventionelle Methode besteht darin, Energie aus dem Feld in einem Ladungsspeicher, beispielsweise in einer Kapazität, zu konzentrieren. Dadurch wird eine Gleichspannung UDC gewonnen, der eine sägezahnförmige Spannung aufmoduliert ist, weil das Laden des Energiespeichers und das Entladen sich zeitlich abwechseln. Tritt eine TypA-Lücke auf, was bedeutet, daß z.B. für zirka 3 µs kein Takt und kein Feld anliegt, muss eine Energiequelle dem Verbraucher, also dem Chip, die in dieser Zeit benötigte Energie zur Verfügung stellen.

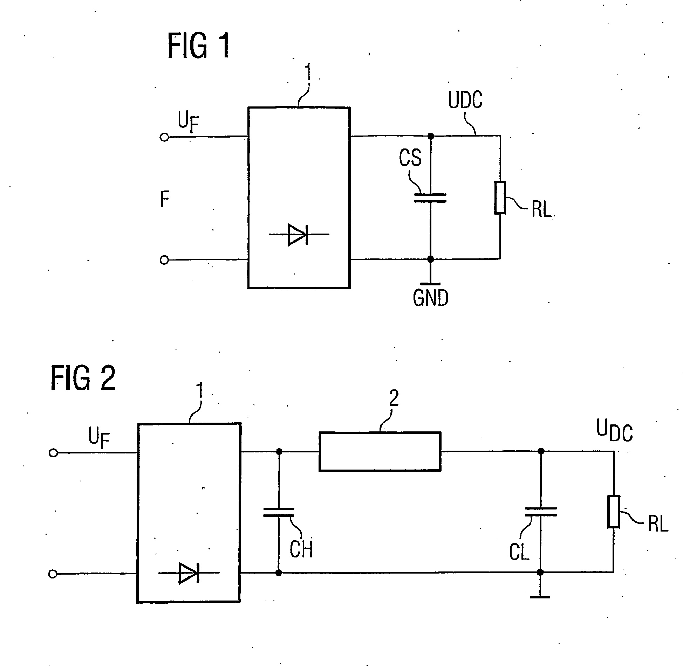

Anhand des in Figur 1 gezeigten Blockschaltbilds wird das Funktionsprinzip der Energieversorgung, wie sie aus dem Stand der Technik bekannt ist, erläutert. Die aus dem Feld F generierte Spannung UF lädt während der Feldspitzen eine Stützkapazität CS über einen Gleichrichter 1 auf. Die Ladezeit ist dabei in der Regel sehr kurz. Außerhalb dieser kurzen Ladezeit stellt die Stützkapazität CS die Energieversorgung des Chips sicher. Während der Zeitdauer, in der die Stützkapazität CS als Energieversorgung dient, wird sie über einen Lastwiderstand RL, welcher den Verbraucher symbolisiert, entladen. Ist der Lastwiderstand RL klein, wird viel Energie und damit eine hohe Ladungsmenge aus der Stützkapazität CS entnommen und die Gleichspannung UDC am Lastwiderstand RL sinkt entsprechend einer exponentiellen Funktion rasch ab. Je kleiner die Stützkapazität CS ist, um so schneller fällt die Spannung UDC am Lastwiderstand RL ab. Die Stützkapazität CS muss so groß ausgelegt sein, dass in der zu überbrückten Zeit die Spannung UDC nicht unter eine Mindestspannung fällt. Wird aus diesem Grund eine große Stützkapazität CS vorgesehen, wird die Spannung UDC zwar nicht unter die Mindestspannung fallen, dafür wird es aber um so schwieriger, die Stützkapazität CS auf die gewünschte Spannung UDCsoll aufzuladen. Die Schwierigkeit ergibt sich dadurch, daß aus dem Feld F nicht beliebig viel Energie bezogen werden kann. Die Menge an Energie, die aus dem Feld F bezogen werden kann ist unter anderem von der Sendeleistung des Kartenlesers, der Güte der Antenne des Kartenlesers, der Distanz zwischen der Antenne des Kartenlesers und der Antenne des Chips und der Güte der Antenne des Chips abhängig. Damit die Energiebilanz ausgeglichen ist, muss das Feld F zumindest soviel Energie nachliefern, wie der Lastwiderstand RL Energie verbraucht.

Eine weitere häufig eingesetzte Methode besteht darin, einen Serienregler und eine Kapazität CH der Schaltung gemäß Figur 1 hinzuzufügen. Die sich daraus ergebende Ausführungsform ist in Figur 2 gezeigt. Mit Hilfe des Gleichrichters 1 wird die vom Feld F hervorgerufene Spannung UF zu einer pulsierenden Gleichspannung UDC umgeformt und mit Hilfe der Kapazität CH geglättet. Der Serienregler 2, der in diesem Fall keinen guten PSRR-Wert aufweisen muss, erzeugt eine Spannung UDC, die gegenüber der Spannung UF vermindert ist. Ohne einen Serienregler muss die Regelung der Spannung UDC von einem Parallelregler übernommen werden.

In der DE 41 04 274 A1 ist eine Anordnung beschrieben, bei der die Datenübertragung durch Modulation der Spannungsversorgung bei der die Ausgabe des ersten logischen Pegels durch eine Längsregelung und die Ausgabe des zweiten logischen Pegels durch eine Parallelregelung erfolgt.

In der US 6,275,681 B1 ist eine Chipkarte beschrieben, bei der über ein Ladegerät bei geringem Feld ein Energiespeicher, wie z.B. eine Batterie oder ein Kondensator, zur Stromversorgung des Chips eingesetzt werden kann, und über einen Multiplexer ausgewählt werden kann, welche Energiequelle zum Betreiben der Chipkarte eingesetzt werden soll.

Insgesamt ist darauf zu achten, daß das Feld F nicht durch große Energiespeicher, wie dies die Kapazität CH und die Kapazität CS darstellen, über eine niederohmige Verbindung, welche beispielsweise durch den Gleichrichter 1 gebildet wird, belastet wird. Werden große Energiespeicher niederohmig mit dem Feld F verbunden, werden Datenübertragungen mit hohen Datenraten unmöglich. Zudem wird dabei auch bei niedrigen Datenraten die Dynamik vermindert.

Auch bei dieser Ausführungsform ergeben sich die oben genannten Probleme.

Sowohl die in Figur 1 gezeigte Ausführungsform als auch die in Figur 2 gezeigte Ausführungsform haben den Nachteil, daß, da die Kapazität groß zu wählen ist, bei der Datenkommunikation der Hub des Nutzsignals und die Dynamik bald zu gering werden. Der Kartenleser ist nicht mehr in der Lage die Lastmodulation des Chips von Störungen aus dem Feld zu unterscheiden, was zu einer Fehlfunktion führt. Ebenso kann der Chip aufgrund des geringen Nutzsignals nicht mehr die vom Kartenleser gesendeten Daten dekodieren. Die Dynamik im Signal wird zu gering. Das Nutzsignal geht im Rauschen unter und die Datenkommunikation bricht zusammen.

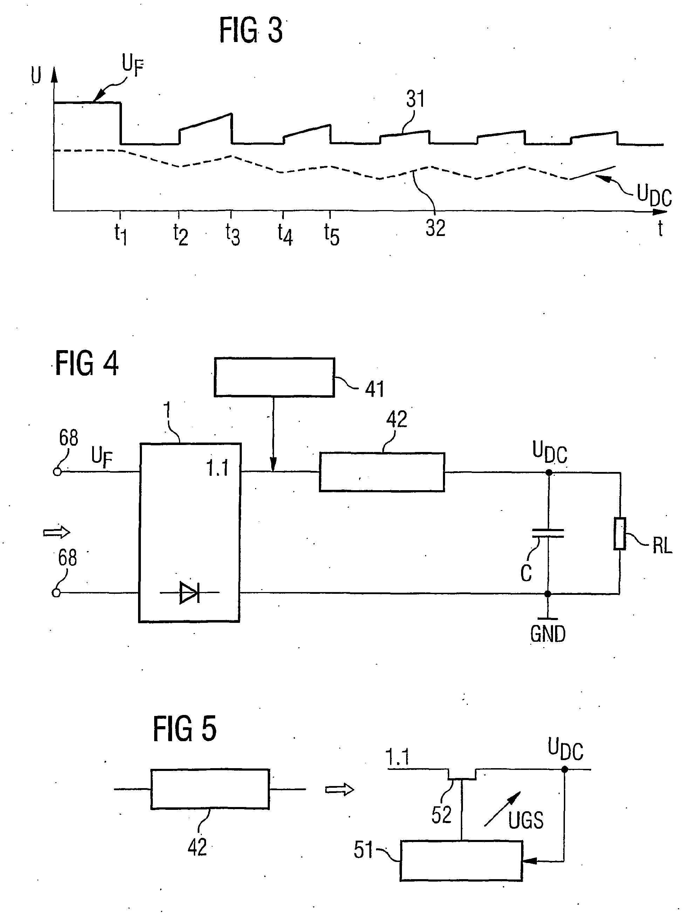

In Figur 3 ist zur Erläuterung dieses Zusammenhangs der Verlauf der Spannung UF am Eingang des Gleichrichters 1 und der Verlauf der Spannung UDC am Lastwiderstand RL gezeigt. Dazu ist auf der x-Achse die Zeit t und auf der y-Achse die Amplitude der Spannung U aufgetragen. Mit dem Bezugszeichen 31 ist der Verlauf der Spannung UF am Eingang des Gleichrichters 1 die gekennzeichnet. Die gestrichelte Linie, welche mit dem Bezugszeichen 32 versehen ist, gekennzeichnet den Verlauf der Spannung UDC. Die Spannung UF fällt zum Zeitpunkt t1 ab und steigt erst zum Zeitpunkt t2 wieder an, was dazu führt, daß die Spannung UDC im Bereich zwischen den beiden Zeitpunkten t1 und t2 bedingt durch die Last RL kontinuierlich absinkt und vom Zeitpunkt t2 bis zum Zeitpunkt t3, nämlich solange die Spannung UF ansteigt, ebenfalls wieder zunimmt. Es ist jedoch festzustellen, daß zum Zeitpunkt t3 die Spannung UDC nicht mehr ihren ursprünglichen Wert erreicht. Die Zeiträume t2-t3 und t4-t5 reichen nicht aus, um die Spannung UDC jeweils wieder auf ihren ursprünglichen Wert zu bringen. Vielmehr nimmt das Spannungsmittel der Spannung UDC kontinuierlich ab. Dies führt letztendlich dazu, daß der Kartenleser nicht mehr in der Lage ist, die Lastmodulation des Chips von Störungen aus dem Feld zu unterscheiden und es damit zu einer Fehlfunktion kommt. Ebenso kann der Chip aufgrund des geringen Nutzsignals nicht mehr die vom Kartenleser gesendeten Daten dekodieren.

### Darstellung der Erfindung

Eine Aufgabe der Erfindung ist es daher, eine Vorrichtung zur Versorgung einer Datenübertragungseinheit mit Energie anzugeben, bei der jederzeit die Datenübertragung gewährleistet ist.

Die Aufgabe wird durch eine Vorrichtung zur Versorgung einer Datenübertragungseinheit mit Energie mit den Merkmalen gemäß Patentanspruch 1 gelöst.

Die erfindungsgemäße Vorrichtung zur Versorgung einer Datenübertragungseinheit mit Energie weist einen Energieversorgungseingang, über welchen die Energie kontaktlos, vorzugsweise über ein elektrisches Feld, in die Datenübertragungseinheit einspeisbar ist, auf. Zudem ist eine Entkopplungseinheit zum Koppeln und Entkoppeln des Energieversorgungseingangs mit der Datenübertragungseinheit vorgesehen, wobei die Entkopplungseinheit derart ausgebildet und betreibbar ist, daß die Entkopplung erfolgt, wenn die Versorgungsspannung für die Datenübertragungseinheit einen Toleranzbereich verlässt.

Vorteilhafte Weiterbildungen der Erfindung ergeben sich aus den in den abhängigen Patentansprüchen angegebenen Merkmalen.

Bei einer Ausführungsform der Erfindung ist ein Energiespeicher vorgesehen, welcher bedarfsweise mit der Datenübertragungseinheit verbunden ist. Dies hat den Vorteil, daß die Datenübertragungseinheit dadurch auch über einen größeren Zeitraum hinweg betreibbar ist.

Vorteilhafterweise weist der Energiespeicher eine Kapazität auf. Damit lässt sich auf einfache Art und Weise elektrische Energie zwischenspeichern.

Entsprechend einer bevorzugten Ausführungsvariante der erfindungsgemäßen Vorrichtung ist ein Schaltmittel zum bedarfsweisen Verbinden des Energiespeichers mit der Datenübertragungseinheit vorgesehen.

Bei einer Weiterbildung der erfindungsgemäßen Vorrichtung ist eine Steuereinheit zum Steuern des Schaltmittels vorgesehen, wobei die Steuereinheit derart ausgebildet und betreibbar ist, daß die Verbindung des Energieversorgungseingangs mit der Datenübertragungseinheit erfolgt, wenn die Versorgungsspannung den Toleranzbereich verlässt. Damit wird erreicht, daß der Energiespeicher nur in den Fällen, in denen zusätzliche Energie benötigt wird, zugeschaltet wird.

Darüber hinaus kann bei der erfindungsgemäßen Vorrichtung das Schaltmittel als N-Kanal MOS-Transistor ausgebildet sein.

Zur Lösung der Aufgabe wird ferner vorgeschlagenen in der erfindungsgemäßen Vorrichtung eine Diode vorzusehen, welche zwischen den Energieversorgungseingang und die Datenübertragungseinheit geschaltet ist.

Bei einer weiteren Ausführungsform der Erfindung weist die Vorrichtung eine weitere Diode auf, welche zwischen den Energiespeicher und den Energieversorgungseingang geschaltet ist.

Vorteilhafterweise weist die erfindungsgemäße Vorrichtung einen Serienregler auf, welche derart ausgebildet ist, daß damit die Versorgungsspannung der Datenübertragungseinheit konstant gehalten werden kann. Dadurch wird dauerhaft eine gleichbleibend hohe Qualität der Datenübertragung sichergestellt.

Darüber hinaus kann der Serienregler bei der erfindungsgemäßen Vorrichtung einen Transistor aufweisen, der zwischen den Energieversorgungseingang und die Datenübertragungseinheit geschaltet ist.

Zur Lösung der Aufgabe wird ferner vorgeschlagenen, daß eine weitere Kapazität vorgesehen ist, die parallel zur Datenübertragungseinheit geschaltet ist.

Entsprechend einer bevorzugten Ausführungsvariante ist bei der erfindungsgemäßen Vorrichtung der Toleranzbereich durch einen Modulationsindex von maximal 14 % vorgegeben.

Bei dem erfindungsgemäßen Verfahren zur Versorgung einer Datenübertragungseinheit mit Energie ist vorgesehen, daß die Datenübertragungseinheit während einer Datenübertragung vom Energiespeicher entkoppelt wird.

### Kurze Beschreibung der Zeichnungen

Im folgenden wird die Erfindung anhand von sieben Figuren weiter erläutert.
- Figur 1: zeigt in Form eines Blockschaltbilds eine Vorrichtung zur Energieversorgung für einen Chip in einer Chipkarte gemäß dem Stand der Technik.
- Figur 2: zeigt in Form eines Blockschaltbilds eine zweite Vorrichtung zur Energieversorgung für einen Chip in einer Chipkarte gemäß dem Stand Technik.
- Figur 3: zeigt die Verläufe der Spannung am Eingang und am Ausgang der Vorrichtung zur Energieversorgung gemäß dem Stand der Technik.
- Figur 4: zeigt in Form eines Blockschaltbilds eine mögliche Ausführungsform der erfindungsgemäßen Vorrichtung zur Energieversorgung.
- Figur 5: zeigt eine mögliche Ausführungsform eines Entkopplungsmoduls, wie es bei der erfindungsgemäßen Vorrichtung zum Einsatz kommen kann.
- Figur 6: zeigt in Form eines Schaltplans eine mögliche Ausführungsform der erfindungsgemäßen Vorrichtung zur Energieversorgung für einen Chip in einer Chipkarte.
- Figur 7: zeigt die Verläufe der Spannung am Eingang und am Ausgang der erfindungsgemäßen Vorrichtung zur Energieversorgung.

### Wege zur Ausführung der Erfindung

Auf die Beschreibung der Figuren 1, 2 und 3 wird im folgenden nicht weiter eingegangen, da dies bereits in der Beschreibungseinleitung erfolgte. An dieser Stelle wird deshalb darauf verwiesen.

Im Blockschaltbild in Figur 4 ist eine mögliche Ausführungsform der erfindungsgemäßen Vorrichtung zur Versorgung einer Datenübertragungseinheit mit Energie prinzipiell dargestellt. Selbstverständlich kann die erfindungsgemäße Vorrichtung auch zur Versorgung weiterer Komponenten auf dem Chip des Chipkarte dienen. An den Eingängen 68 der Vorrichtung liegt die Spannung UF an, welche aus dem Feld F generiert wurde. Die Eingänge 68, welche auch als Energieversorgungseingänge bezeichnet werden, sind mit den Eingängen eines Gleichrichters 1 verbunden. Ausgangsseitig ist der Gleichrichter 1 mit einem Energiespeicher 41 und einen Entkopplungsmodul 42 verbunden. Dem Entkopplungsmodul 42 wiederum ist eine Kapazität C sowie der Verbraucher, symbolisiert durch den Lastwiderstand RL nachgeschaltet. Der Lastwiderstand RL und die Kapazität C sind dabei parallel zueinander angeordnet.

Ziel ist es, daß das Feld F durch keinen Energiespeicher des Chips beeinflusst wird. Aus diesem Grund wird das Feld F von den Energiespeichern des integrierten Schaltkreises im Bedarfsfall entkoppelt. Befindet sich ein solcher Energiespeicher mit einer starken Koppelung im Feld F, beispielsweise über einen niederohmigen Widerstand, eine Diode oder dergleichen, so darf aus diesem Energiespeicher zumindest während der Datenkommunikation nur sehr wenig Energie entnommen werden. Um dies zu erreichen ist deshalb das Entkopplungsmodul 42 dem Gleichrichter 1 nachgeschaltet. Damit wird erreicht, daß der Chip immer mit Energie versorgt wird und zudem das Feld F während der Kommunikation nicht belastet wird. Die Energielieferung vom Energiespeicher erfolgt während einer Feldlücke, wobei die Spannungsschwelle, ab der die Energie aus einem Energiespeicher zum Verbraucher geliefert wird, genau definiert ist.

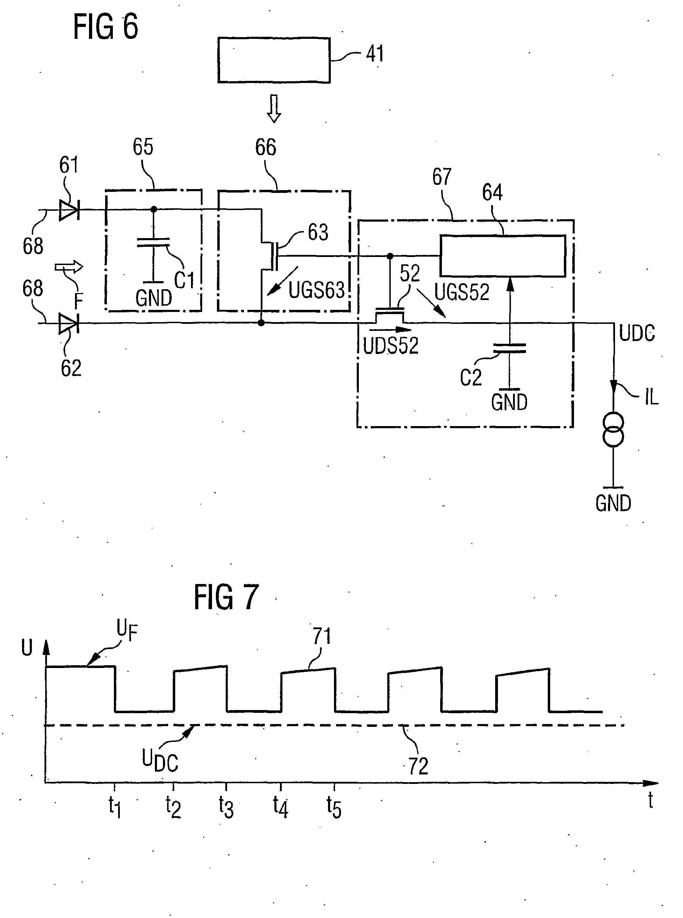

Durch das Entkopplungsmodul 42 wird die Spannung UDC auf einem konstanten Potenzial gehalten. Dies ist auch aus dem Verlauf der Spannung UDC in Figur 7, welche mit dem Bezugszeichen 72 gekennzeichnet ist, entnehmbar. Die Spannung am Eingang des Entkopplungsmoduls 42 muss dazu höher sein, um eine Dynamik im Feld F zuzulassen.

Das Entkopplungsmodul 42 kann, wie in der in Figur 5 gezeigten Ausführungsform, ausgebildet sein. Dabei ist der Ausgang 1.1 des Gleichrichters 1 mit einem N-Kanal MOS-Transistor 52 verbunden. Über den N-Kanal MOS-Transistor 52 wird die Gate-Source-Spannung UGS und damit die Spannung UDC so geregelt, daß sie konstant bleibt und somit dynamische Schwankungen am Ausgang 1.1 des Gleichrichters 1 unterdrückt werden. Die Steuerung des N-Kanal MOS-Transistors 52 erfolgt über eine Steuereinheit 51, an welcher eingangsseitig die Spannung UDC anliegt und welche ausgangsseitig mit dem Steuereingang des N-Kanal MOS-Transistors 52 verbunden ist. Lediglich eine Modulation der Kanallänge des N-Kanal MOS-Transistors 52 und eine parasitäre Entkopplung können sich auf das Gate des N-Kanal MOS-Transistors störend auswirkten.

In Figur 6 ist ein Schaltplan einer möglichen Ausführungsvariante der erfindungsgemäßen Vorrichtung zur Versorgung einer Datenübertragungseinheit mit Energie gezeigt. Die Versorgungseingänge 68 führen auf zwei Dioden 61 und 62, deren Kathoden mit den Steuerausgängen eines Schalttransistors 63 verbunden sind. Die Kathode der Diode 61 ist zusätzlich mit dem Energiespeicher 65 in Form einer Kapazität C1 verbunden. Der Steuereingang des Schalttransistors 63 ist sowohl mit dem Steuereingang des Reglertransistors 52, der auch als Serienregler bezeichnet wird, als auch mit dem Ausgang der Steuereinheit 64 für den Serienregler 52 verbunden. Die Kapazität C2, welche einerseits mit einem Bezugspotenzial GND und andererseits mit den Steuerausgang des Reglertransistors 52, dem Steuereingang der Steuereinheit 64 und dem Verbraucher verbunden ist, entspricht der in Figur 4 gezeigten Kapazität C. Im Block 67 ist der Regler mit dem Lastenergiespeicher C2 zusammengefasst.

Im folgenden wird die Funktionsweise der in Figur 6 gezeigten Schaltung erläutert. Der Serienregler 52 versucht mittels der Steuereinheit 64 die Spannung UDC auf einem konstanten Potenzial zu halten. Die Spannung UF, welche durch das Feld F hervorgerufen wird, ist größer als die Summe aus den Spannungen UDC + UDS52 + ca. 100mV, wobei UDS52 die Drain-Source-Spannung des Transistors 52 ist. Dies gilt bei Normalbetrieb, beim Senden von Daten vom Chip an den Kartenleser und beim Empfang von Daten mit einem Modulationsindex von bis zu 14 %.

Ist jedoch der Modulationsindex größer als 14 %, so dass er damit nicht mehr innerhalb der ISO-Toleranz liegt, fällt die durch das Feld F hervorgerufene Spannung UF so weit ab, daß der Schalttransistor 63 öffnet, das heißt leitend wird. Die im Energiespeicher 65 und damit in der Kapazität C1 gespeicherte Energie fließt über den Schalttransistor 63 und den Serienregler 52 zur Last, also dem Verbraucher. Damit wird erreicht, daß die Energie nicht mehr aus dem Feld F abgezogen wird und daher auch nicht mehr über die Diode 62 und den Serienregler 52 zum Verbraucher gelangt.

Mit Hilfe dieser Schaltung steht der Energiespeicher 65 nur dann dem Verbraucher zur Verfügung, wenn zusätzliche Energie benötigt wird. Benötigt wird die Energie dann, wenn das Feld F so stark abgefallen ist, daß der Chip nicht mehr von der Feldenergie versorgt werden kann. Dieser Energievorrat aus dem Energiespeicher 65 wird sehr schnell zugeschaltet und liefert abhängig vom Stromverbrauch der Last die entsprechende Energie. Der zusätzliche Schaltungsaufwand ist vorteilhafterweise sehr gering. Die Schaltung selbst verbraucht keinen zusätzlichen Strom.

Für die Realisierung wird tatsächlich nur ein NMOS-Transistor benötigt, der eine größere Stromergiebigkeit aufweist als der NMOS-Transistor des Serienreglers 52.

Die Schaltung ist sowohl für eine 100% Amplituden Shift Keying- als auch für eine 10% Amplituden Shift Keying-Datenübertragung geeignet.

Anhand der in Figur 7 gezeigten Spannungsverläufe 71 und 72, wobei das Bezugszeichen 71 den Verlauf der durch das Feld F hervorgerufene Spannung UF kennzeichnet und das Bezugszeichen 72 mit der gestrichelten Linie den Verlauf der Spannung UDC kennzeichnet, ist zu erkennen, daß die Spannung UDC über die gesamte Zeitdauer konstant bleibt. Im Gegensatz zu dem in Figur 3 gezeigten Spannungsverlauf 32 fällt die Spannung UDC bei der Erfindung über die Zeit nicht ab.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung zu verlassen, wie er in den Patentansprüchen definiert ist.

### Bezugszeichenliste

- 1: Gleichrichter
- 1.1: Ausgang des Gleichrichters
- 2: Serienregler
- 31: Verlauf der Spannung UF
- 32: Verlauf der Spannung UDC
- 41: Energiespeicher
- 42: Entkopplungsmodul
- 52: Transistor
- 61,62: Dioden
- 63: Schalttransistor
- 64: Steuerung
- UDS52: Drain-Source Spannung am Transistor 52
- UGS52: Gate-Source Spannung am Transistor 52
- UGS63: Gate-Source Spannung am Transistor 63
- 66: Schaltmittel
- 67: Regler mit Lastenergiespeicher
- 68: Versorgungseingänge
- 71: Verlauf der Spannung UF
- 72: Verlauf der Spannung UDC
- t1 bis t5: verschiedene Zeitpunkte
- UDC: gleichgerichtete Spannung
- RL: Lastwiderstand
- CH: große Kapazität
- CL: kleine Kapazität
- UF: vom Feld hervorgerufene Spannung
- CS: Stützkapazität
- IL: Laststrom
- F: Feld
- GND: Bezugspotenzial

## Patentansprüche

1. Vorrichtung zur Versorgung einer Datenübertragungseinheit mit Energie, mit einem Energieversorgungseingang (68), über welchen die Energie kontaktlos über ein Feld, vorzugsweise über ein elektrisches Feld (F), in die Datenübertragungseinheit (RL) einspeisbar ist, wobei mittels eines Gleichrichters (62) aus dem Feld eine gleichgerichtete Spannung erzeugt wird, von der eine konstante Versorgungsspannung (UDC) für die Datenübertragungseinheit abgeleitet wird,
**dadurch gekennzeichnet, dass**
- eine Entkoppelungseinheit (42) zum Koppeln und Entkoppeln des Energieversorgungseingangs (68) mit der Datenübertragungseinheit (RL) vorgesehen ist, wobei die Entkopplungseinheit (42) derart ausgebildet und betreibbar ist, dass die Entkopplung erfolgt, wenn die gleichgerichtete Spannung unter einen bestimmten Wert sinkt,
- ein Energiespeicher (65) und ein Schaltmittel (66) vorgesehen sind, wobei der Energiespeicher (65) über das Schaltmittel (66) bedarfsweise mit der Datenübertragungseinheit (RL) verbindbar ist, und
- eine Steuereinheit (67) zum Steuern des Schaltmittels vorgesehen ist, die derart ausgebildet und betreibbar ist, dass die Verbindung des Energiespeichers (65) mit der Datenübertragungseinheit (RL) erfolgt, wenn die gleichgerichtete Spannung unter einen bestimmten Wert sinkt.

2. Vorrichtung nach Patentanspruch 1,
bei der der Energiespeicher (65) eine Kapazität (C1) aufweist.

3. Vorrichtung nach Patentanspruch 1 oder 2,
bei der das Schaltmittel (66) als N-Kanal MOS-Transistor (63) ausgebildet ist.

4. Vorrichtung nach einem der Patentansprüche 1 bis 3,
mit einer Diode (62), welche zwischen den Energieversorgungseingang (68) und die Datenübertragungseinheit (RL) geschaltet ist.

5. Vorrichtung nach einem der Patentansprüche 1 bis 4,
mit einer weiteren Diode (61), welche zwischen den Energiespeicher (65) und den Energieversorgungseingang (68) geschaltet ist.

6. Vorrichtung nach einem der Patentansprüche 1 bis 5,
mit einem Serienregler (67), welcher derart ausgebildet ist, dass damit die Versorgungsspannung (UDC) der Datenübertragungseinheit (RL) konstant gehalten werden kann.

7. Vorrichtung nach Patentanspruch 6,
bei der der Serienregler (67) einen Transistor (52) aufweist, der zwischen den Energieversorgungseingang (68) und die Datenübertragungseinheit (RL) geschaltet ist.

8. Vorrichtung nach einem der Patentansprüche 2 bis 7,
mit einer weiteren Kapazität (C2), die parallel zur Datenübertragungseinheit (RL) geschaltet ist.

9. Verfahren zum Betreiben einer Vorrichtung nach einem der Patentansprüche 1 bis 8, bei dem die Datenübertragungseinheit (RL) während einer Datenübertragung vom Energiespeicher (41) entkoppelt wird.

## Claims

1. Device for supplying a data transfer unit with energy,
having an energy supply input (68), via which the energy can be fed into the data transfer unit (RL) contactlessly by means of a field, preferably by means of an electric field (F), a rectified voltage being generated from the field by means of a rectifier (62), from which voltage is derived a constant supply voltage (UDC) for the data transfer unit, **characterized in that**
- a decoupling unit (42) is provided for coupling and decoupling the energy supply input (68) to and from the data transfer unit (RL), the decoupling unit (42) being designed and being able to be operated in such a way that the decoupling is effected if the rectified voltage falls below a certain value,
- an energy store (65) and a switching means (66) are provided, the energy store (65) being able to be connected as required to the data transfer unit (RL) via the switching means (66), and
- a control unit (67) for controlling the switching means is provided, which is designed and able to be operated in such a way that the energy store (65) is connected to the data transfer unit (RL) if the rectified voltage falls below a certain value.

2. Device according to patent Claim 1,
in which the energy store (65) has a capacitance (C1).

3. Device according to patent Claim 1 or 2,
in which the switching means (66) is designed as an N-channel MOS transistor (63).

4. Device according to one of patent Claims 1 to 3,
having a diode (62) connected between the energy supply input (68) and the data transfer unit (RL).

5. Device according to one of patent Claims 1 to 4,
having a further diode (61) connected between the energy store (65) and the energy supply input (68).

6. Device according to one of patent Claims 1 to 5,
having a series regulator (67), which is designed in such a way that the supply voltage (UDC) of the data transfer unit (RL) can be kept constant thereby.

7. Device according to patent Claim 6,
in which the series regulator (67) has a transistor (52) connected between the energy supply input (68) and the data transfer unit (RL).

8. Device according to one of patent Claims 2 to 7,
having a further capacitance (C2) connected in parallel with the data transfer unit (RL).

9. Method for operating a device according to one of patent Claims 1 to 8,
in which the data transfer unit (RL) is decoupled from the energy store (41) during a data transfer.

## Revendications

1. Dispositif d'alimentation en énergie d'une unité de transmission de données, comprenant une entrée (68) d'alimentation en énergie, par laquelle l'énergie est injectée sans contact par un champ, de préférence par un champ (F) électrique, dans l'unité (RL) de transmission de données, une tension redressée à partir du champ étant produite au moyen d'un redresseur (62), tension de laquelle est dérivée une tension (UDC) constante d'alimentation de l'unité de transmission de données,
**caractérisé en ce que**
- il est prévu une unité (42) de découplage pour découpler l'entrée (68) d'alimentation en énergie de l'unité (RL) de transmission de données et pour l'y coupler, l'unité (42) de découplage étant constituée de telle façon et pouvant fonctionner de telle façon que le découplage s'effectue lorsque la tension redressée s'abaisse au-dessous d'une valeur déterminée ;
- il est prévu un accumulation (65) d'énergie et un moyen (66) de commutation, l'accumulateur (65) d'énergie pouvant être relié par le moyen (66) de commutation, en cas de besoin, à l'unité (RL) de transmission de données ; et
- il est prévu une unité (67) de commande du moyen de commutation, qui est constituée de telle façon et qui peut fonctionner de telle façon que la liaison de l'accumulateur (65) d'énergie avec l'unité (RL) de transmission de données s'effectue lorsque la tension redressée s'abaisse en dessous d'une valeur déterminée.

2. Dispositif suivant la revendication 1,
dans lequel l'accumulateur (65) d'énergie comporte une capacité (C1) .

3. Dispositif suivant la revendication 1 ou 2,
dans lequel le moyen (66) de commutation est constitué sous la forme d'un transistor (63) MOS à canal N.

4. Dispositif suivant l'une des revendications 1 à 3,
comprenant une diode (62) qui est montée entre l'entrée (68) d'alimentation en énergie et l'unité (RL) de transmission de données.

5. Dispositif suivant l'une des revendications 1 à 4,
comprenant une autre diode (61) qui est montée entre l'accumulateur (65) d'énergie et l'entrée (68) d'alimentation en énergie.

6. Dispositif suivant l'une des revendications 1 à 5,
comprenant un régulateur (67) série qui est tel qu'ainsi la tension (UDC) d'alimentation de l'unité (RL) de transmission de données peut être maintenue constante.

7. Dispositif suivant la revendication 6,
dans lequel le régulateur (67) série comporte un transistor (52) qui est monté entre l'entrée (68) d'alimentation en énergie et l'unité (RL) de transmission de données.

8. Dispositif suivant l'une des revendications 2 à 7,
comprenant une autre capacité (C2) qui est montée en parallèle à l'unité (RL) de transmission de données.

9. Procédé pour faire fonctionner un dispositif suivant l'une des revendications 1 à 8, dans lequel on découpe de l'accumulateur (41) d'énergie l'unité (RL) de transmission de données pendant une transmission de données.
